# EUROPEAN PATENT SPECIFICATION

(11) **EP 4 049 892 B1**
(45) Date of publication and mention of the grant of the patent: **03.04.2024**
(21) Application number: 20878899.2
(22) Date of filing: 22.10.2020
(51) Int. Cl.: B60N 2/50, B60N 2/52, B60N 2/54

(54) **SEAT SUSPENSION MECHANISM**
SITZAUFHÄNGUNGSMECHANISMUS
MÉCANISME DE SUSPENSION DE FEUILLE

(30) Priority: 22.10.2019 JP 2019192369
(43) Date of publication of application: 31.08.2022
(73) Proprietor: Delta Kogyo Co., Ltd., Aki-gun, Hiroshima 735-8501 (JP)
(72) Inventor: FUJITA Etsunori, Aki-gun, Hiroshima 735-8501 (JP); KUWANO Ryuji, Aki-gun, Hiroshima 735-8501 (JP); MAKITA Soichi, Aki-gun, Hiroshima 735-8501 (JP)
(74) Representative: Hoffmann Eitle
(86) International application number: PCT/JP2020/039738
(87) International publication number: WO 2021/079942

(56) References cited:
- EP-A1- 3 636 486
- CN-A- 102 555 867
- CN-A- 105 774 610
- CN-U- 210 617 932
- JP-A- 2010 179 719
- JP-A- 2010 179 720
- JP-A- 2019 048 489

## Description

### Technical Field

The present invention relates to a seat suspension mechanism used for support for a seat of a vehicle.

### Background Art

JP 2010-179719 A and JP 2010-179720 A disclose a seat suspension mechanism in which an upper frame provided to be movable up and down relative to a lower frame is elastically supported by a magnetic spring and torsion bars. This seat suspension mechanism has a region where, in a case where a characteristic that restoring force of the magnetic spring in the same direction as a working direction of restoring force of the torsion bars increases in accordance with an increase in a displacement amount is referred to as "a positive spring characteristic (a spring constant at this time is referred to as "a positive spring constant")" and a characteristic that the restoring force of the magnetic spring in the same direction as the working direction of the restoring force of the torsion bars decreases in spite of the increase in the displacement amount is referred to as "a negative spring characteristic (a spring constant at this time is referred to as "a negative spring constant")", by making use of the fact that the magnetic spring exhibits the negative spring characteristic in a predetermined displacement range and combining the magnetic spring with the torsion bars exhibiting the positive spring characteristic, a characteristic of a constant load where a load value relative to a displacement amount in the whole system resulting from the superposition of the characteristics of the two in the predetermined displacement range is substantially constant (a spring constant is substantially zero) is exhibited.

The seat suspension mechanism of JP 2010-179719 A and JP 2010-179720 A is configured such that, owing to the aforesaid structure using the magnetic spring and the torsion bars, normal vibrations having predetermined frequencies and amplitudes are absorbed using the constant load region where the spring constant resulting from the superposition of the spring constants of the two is substantially zero, while energy caused by impact vibration is absorbed by a damper suspended between the upper frame and the lower frame.

However, in a case of a driver seat of an earth-moving machine, because there are many occasions to run on a road surface having large bumps and potholes, it is necessary to put emphasis on measures against impact vibrations having a larger amplitude.

In consideration of this point, JP 2019-48489 A proposes a seat suspension mechanism having a structure in which spring-damper attached suspension units are stacked in plurality.

Another seat suspension mechanism is disclosed in EP 3 636 486 A1 forming the basis for the preamble of claim 1.

### Summary of the Invention

### Problems to Be Solved by the Invention

However, the seat suspension mechanism in JP 2019-48489 A includes a spring mechanism and a damper mechanism for each tier, which complicates the structure.

The present invention was made in consideration of the above point, and has an object to provide a seat suspension mechanism capable of exhibiting high vibration absorption characteristic and impact absorption characteristic with a simpler configuration.

### Means for Solving the Problems

To solve the above problem, a seat suspension mechanism of the present invention disposed between a vehicle body structure and a seat, the seat suspension mechanism includes:
a base frame attached on the vehicle body structure side;
a seat support frame attached on the seat side;
an intermediate frame located between the base frame and the seat support frame;
a first link mechanism supporting the intermediate frame with respect to the base frame;
a second link mechanism supporting the seat support frame with respect to the intermediate frame;
a first spring mechanism which elastically biases the intermediate frame;
a second spring mechanism which elastically biases the seat support frame; and
a damper suspended between the base frame and the seat support frame.

The first link mechanism and the second link mechanism are each constituted by a parallel link structure, and meanwhile, are attached so that a rotation direction of links of the first link mechanism and a rotation direction of links of the second link mechanism, in accordance with a displacement of the intermediate frame or the seat support frame, are opposite, and
wherein the damper is attached in a position in an inclined direction opposite to an inclined direction of the links of the first link mechanism at a balanced point.

The first link mechanism and the second link mechanism are each constituted by a parallel link structure, and meanwhile, are attached so that a rotation direction of links of the first link mechanism and a rotation direction of links of the second link mechanism, in accordance with a displacement of the intermediate frame or the seat support frame, are opposite, and
wherein the damper is attached in a position in an inclined direction opposite to an inclined direction of the links of the second link mechanism at a balanced point.

The first link mechanism and the second link mechanism are each constituted by a parallel link structure, and meanwhile, are attached so that a rotation direction of links of the first link mechanism and a rotation direction of links of the second link mechanism, in accordance with a displacement of the intermediate frame or the seat support frame, are opposite, and
wherein two kinds of the dampers whose inclined directions are opposite to each other are disposed.

Preferably, as the first spring mechanism and the second spring mechanism, torsion bars linked to any link of the first link mechanism and any link of the second link mechanism to be rotated are respectively used, and an initial position at a twist angle of each of the torsion bars is adjustable.

Preferably, when the torsion bar linked to any link of the second link mechanism is displaced downward from an upper position, the initial position is set to exhibit a negative spring characteristic of downward biasing to a predetermined position.

Preferably, the first spring mechanism includes:
a linear spring which exhibits a linear characteristic of biasing in a direction of separating the intermediate frame from the base frame in a normal state; and
a magnetic spring which includes stationary magnets and a movable magnet whose relative position to the stationary magnets is displaced in accordance with up-down movement of the intermediate frame relative to the base frame, and exhibits a nonlinear spring characteristic that a spring constant is changed depending on the relative position of the stationary magnets and the movable magnet, and
wherein a spring characteristic of combining the linear spring and the magnetic spring includes a characteristic of being a constant load when the intermediate frame is located in a predetermined up-down movement range including a balanced point.

Preferably, the first spring mechanism further includes
an auxiliary spring mechanism which includes, between the base frame and the intermediate frame, a pantograph link in which connection points of upper-side links and lower-side links are displaced in a front-rear direction and a tensile coil spring suspended on the pantograph link in the front-rear direction, and exhibits a spring characteristic of biasing the intermediate frame downward when the intermediate frame is located in the predetermined up-down movement range including the balanced point, and
wherein a spring characteristic of further combining the auxiliary spring mechanism with the linear spring and the magnetic spring includes the characteristic of being the constant load when the intermediate frame is located in the predetermined up-down movement range including the balanced point.

### Effect of the Invention

In the seat suspension mechanism of the present invention, the intermediate frame is supported through the first link mechanism by the base frame and the seat support frame is supported through the second link mechanism by the intermediate frame, and the first spring mechanism which elastically biases the intermediate frame and the second spring mechanism which elastically biases the seat support frame are included, and meanwhile, the damper is suspended between the base frame and the seat support frame excluding the intermediate frame. Accordingly, despite a simple configuration as compared with the conventional seat suspension mechanism having the multitiered structure, phases with respect to vibrations differ between the seat support frame on which damping force of the damper acts directly and the intermediate frame on which a characteristic of the damper does not act directly, which makes it possible to exhibit high vibration absorption characteristic and impact absorption characteristic.

### Brief Description of Drawings

[FIG. 1] FIG. 1 is a perspective view illustrating a seat suspension mechanism according to one embodiment of the present invention.
[FIG. 2] FIG. 2 is a plan view of FIG. 1.
[FIG. 3] FIG. 3 is a side view of FIG. 1.
[FIG. 4] FIG. 4 is a side view illustrating a state of setting an inclined direction when a damper is attached to be in a direction opposite to that in FIG. 3.
[FIG. 5] FIG. 5 is a side view illustrating a state of disposing two dampers in an X shape.
[FIG. 6] FIG. 6 is a chart for explaining a characteristic of linear springs and a negative spring characteristic of a magnetic spring, and, a characteristic in a constant load region obtained by combining them, of a first spring mechanism.
[FIG. 7] FIG. 7 is a chart illustrating one example of the spring characteristic of the first spring mechanism, a spring characteristic of a second spring mechanism, and a spring characteristic obtained by combining them.
[FIG. 8] FIG. 8 is a chart illustrating another example of the spring characteristic of the first spring mechanism, a spring characteristic of the second spring mechanism, and a spring characteristic obtained by combining them.
[FIG. 9] FIG. 9 is a chart further illustrating the other example of the spring characteristic of the first spring mechanism, a spring characteristic of the second spring mechanism, and a spring characteristic obtained by combining them.
[FIG. 10] FIG. 10 is a side view of a damper.
[FIG. 11] FIG. 11 is a sectional view taken along a B-B line of FIG. 10.
[FIG. 12] FIG. 12 is a chart illustrating a vibration transmissibility in an EM7 related vibration test performed on the seat suspension mechanism of the above embodiment.
[FIG. 13] FIG. 13 is a chart illustrating a vibration transmissibility in a damping test performed on the seat suspension mechanism of the above embodiment.

### Modes for Carrying out the Invention

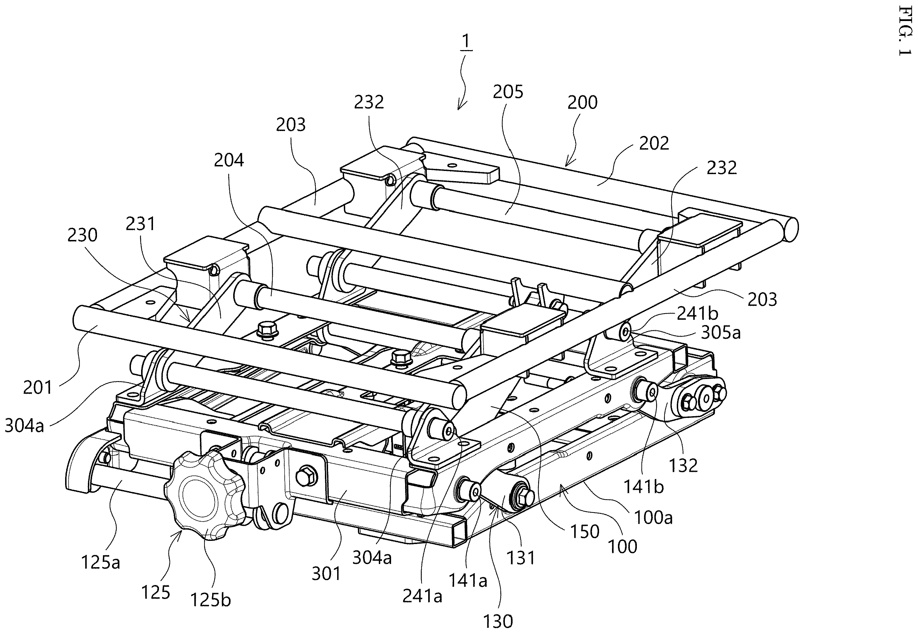

The present invention will be hereinafter described in more detail based on embodiments illustrated in the drawings. FIG. 1 to FIG. 5 illustrate the entire configuration of a seat suspension mechanism 1 according to this embodiment. The seat suspension mechanism 1 supports a seat for vehicle of a passenger car, a truck, a bus, a forklift, or the like.

As illustrated in FIG. 1, the seat suspension mechanism 1 has a base frame 100 and a seat support frame 200, the base frame 100 is fixed to a vehicle floor on a vehicle body structure side, and the seat support frame 200 is attached on a seat side. Moreover, the seat suspension mechanism 1 includes an intermediate frame 300 between the base frame 100 and the seat support frame 200. The base frame 100 fixed to the vehicle floor is formed in a substantially square shape in plan view, and the intermediate frame 300 is supported through a first link mechanism 130.

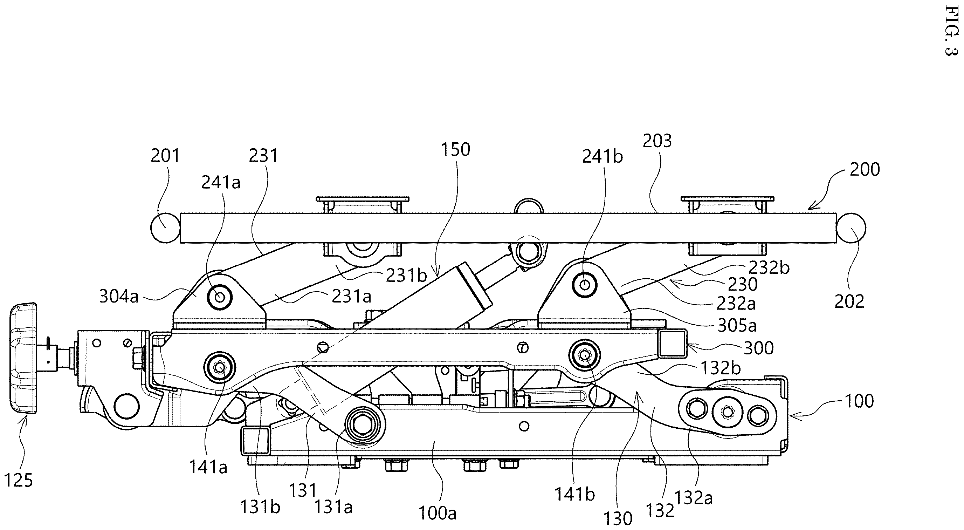

The first link mechanism 130 has a pair of left and right front links 131, 131 and a pair of left and right rear links 132, 132. In the front links 131, 131, lower portions 131a, 131a are rotatably supported close to the front portion of side edge portions 100a, 100a of the base frame 100, and upper portions 131b, 131b are linked close to a front frame 301 on side frames 303, 303 of the intermediate frame 300 (refer to FIG. 3).

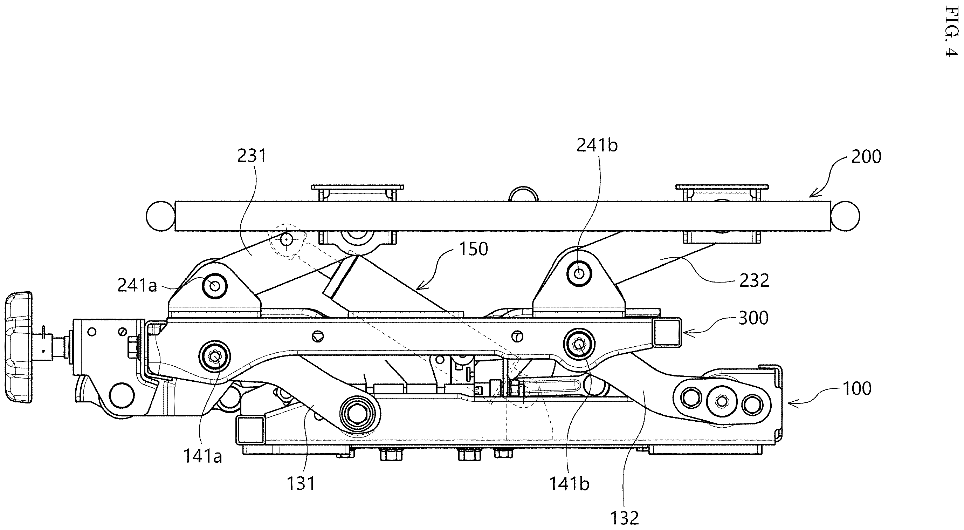

In the rear links 132, 132, lower portions 132a, 132a are rotatably supported close to the rear portion of the side edge portions 100a, 100a of the base frame 100, and upper portions 132b, 132b are linked to the side frames 303, 303 close to a rear frame 302 of the intermediate frame 300. With this structure, the intermediate frame 300 is movable up and down relative to the base frame 100, more accurately, since the first link mechanism 130 is constituted by a parallel link structure including the front links 131, 131 and the rear links 132, 132, the intermediate frame 300 moves up and down along a rotation trajectory of the front links 131, 131 and the rear links 132, 132. That is, with the displacement along a rotation direction of the front links 131, 131 and the rear links 132, 132 having the lower portions 13 1a, 13 1a, 132a, 132a which are connection center points of the links 131, 31, 132, 132 and the base frame 100, as rotation centers, that is, along a direction in which the front links 131, 131 and the rear links 132, 132 fall forward to go toward a lower limit position (a counterclockwise direction in FIG. 3) and a direction in which they return to the opposite of the above direction to go toward an upper limit position (a clockwise direction in FIG. 4), the intermediate frame 300 moves up and down.

Between connection center points of the side frames 303, 303 separated at a predetermined distance in a width direction in the intermediate frame 300 and the front links 131, 131, a first torsion bar 141a is disposed, and between connection center points of the side frames 303, 303 and the rear links 132, 132, a second torsion bar 141b is disposed (refer to FIG. 3). In this embodiment, the first and second torsion bars 141a, 141b are linear springs which exhibit a linear characteristic that their load-deflection characteristic changes approximately linearly, and are combined with a later-described magnetic spring 142 to have a characteristic of being a constant load in a predetermined displacement range, thereby constituting a first spring mechanism 140 which elastically biases the intermediate frame 300. One-side ends of the first and second torsion bars 141a, 141b are linked to the upper portions 131b, 131b, 132b, 132b of the front links 131, 131 and the rear links 132, 132, and the other ends of the first and second torsion bars 141a, 141b are provided not to rotate relative to the side frames 303, 303 of the intermediate frame 300 respectively.

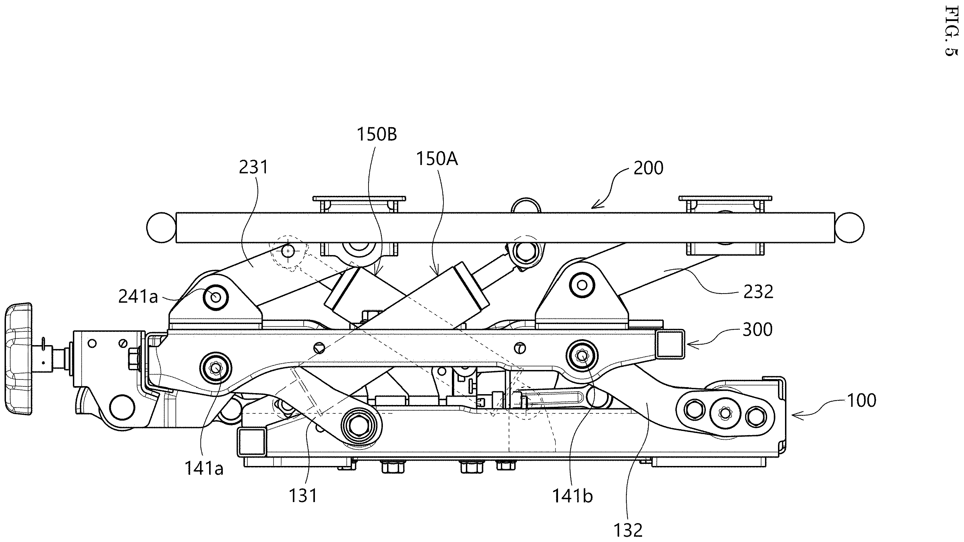

Hence, the first and second torsion bars 141a, 141b are set to exhibit elastic force for biasing in a direction of relatively separating the intermediate frame 300 from the base frame 100, that is, in an upward direction. Further, the other ends of the first and second torsion bars 141a, 141b are connected to plate members 125c, 125d of an elastic force adjusting member 125 respectively (refer to FIG. 5).

The elastic force adjusting member 125 is configured such that the rotation of its adjustment dial 125b causes the rotation of its adjustment shaft 125a, and this rotation causes the rotation of the plate member 125c connected to the first torsion bar 141a on the front links 131, 131 sides and then causes the rotation of the plate member 125d linked to the plate member 125c through a link plate 125e and connected to the second torsion bar 141b on the rear links 132, 132 sides. Therefore, when the adjustment dial 125b is operated to rotate, the first and second torsion bars 141a, 141b are twisted in either direction, so that initial elastic force of the first and second torsion bars 141a, 141b is adjusted, and depending on the weight of a seated person, it is possible to adjust the position of the intermediate frame 300 and the later-described seat support frame 200 supported through the intermediate frame 300 to a predetermined position in the up-down direction (preferably a neutral position).

The magnetic spring 142 includes a stationary magnet unit 1420 and a movable magnet unit 1421 as illustrated in FIG. 5. The stationary magnet unit 1420 is fixed to the base frame 100, and has a pair of stationary magnets 1420a, 1420a arranged to face each other at a predetermined distance in a width direction of the base frame 100. The facing stationary magnets 1420a, 1420a are arranged so that bipolar magnets whose different poles are adjacent to each other in a vertical direction are used and the same poles face each other, for example. The movable magnet unit 1421 includes a movable magnet 1421a disposed in a space between the stationary magnets 1420a, 1420a disposed to face each other at the predetermined distance. The movable magnet 1421a is magnetized in the vertical direction, and supported by a support member 1422, and the support member 1422 is linked to the intermediate frame 300, for example. For this reason, when the intermediate frame 300 moves up and down relative to the base frame 100, the movable magnet 1421a supported by the support member 1422 is displaced up and down in the space between the stationary magnets 1420a, 1420a.

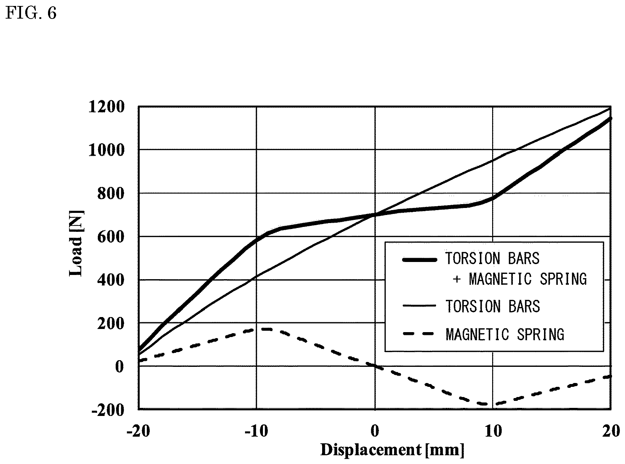

The spring characteristic that the magnetic spring 142 exhibits when the movable magnet 1421a moves in the space between the stationary magnets 1420a, 1420a changes depending on a relative position of the movable magnet 1421a and the stationary magnets 1420a, 1420a. For example, as illustrated in FIG. 6, if a characteristic that restoring force increases in a working direction of the elastic force (restoring force) of the first and second torsion bars 141a, 141b which are the linear springs, that is, in a direction of separating the intermediate frame 300 from the base frame 100 is referred to as a positive spring characteristic, the magnetic spring 142 exhibits, in its load-deflection characteristic, a negative spring characteristic that the restoring force in this direction reduces in a predetermined displacement amount range (a characteristic indicated with a dotted line in the chart). That is, the negative spring characteristic is exhibited in a predetermined range in the vicinity of a position where the movable magnet 1421a crosses a boundary of the N pole and the S pole of the two stationary magnets 1420a, 1420a whose different poles are adjacent to each other (a range from about -9 mm to about +10 mm in an example in FIG. 6).

As a result, in the first spring mechanism 140 of this embodiment including the magnetic spring 142 and the above-described first and second torsion bars 141a, 141b, in the range where the negative spring characteristic acts in the magnetic spring 142 (the range from about -9 mm to about +10 mm in the example in FIG. 6), a spring constant is reduced.

Here, the reduction in the spring constant resulting from the superposition of the positive spring characteristic of the first and second torsion bars 141a, 141b and the negative spring characteristic of the magnetic spring 142 is as described above, and as the spring characteristic obtained by superposing the two, a configuration to have a constant load region where a change amount of a load value is equal to or less than a predetermined amount even if the displacement amount increases, that is, a region where the spring constant is substantially zero (preferably, a spring constant within a range of about -10 N/mm to about 10 N/mm) is preferred.

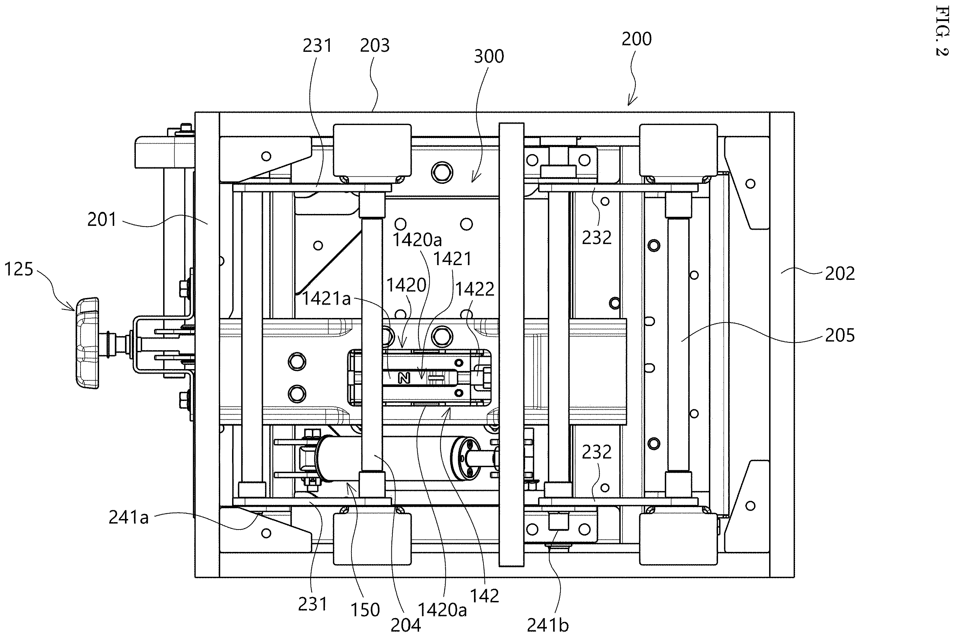

The seat support frame 200 is formed in a substantially square shape having a front frame 201, a rear frame 202, and side frames 203, 203 each connecting end portions of the front frame 201 and the rear frame 202 with each other (refer to FIG. 1 and FIG. 2). The seat support frame 200 is supported with respect to the intermediate frame 300 through a second link mechanism 230. The second link mechanism 230 is constituted by a parallel link structure having a pair of left and right front links 231, 231 and a pair of left and right rear links 232, 232, similarly to the above-described first link mechanism 130, as illustrated in FIG. 3. Lower portions 231a, 231a of the front links 231, 231 are supported by first brackets 304a, 304a fixed close to a front portion of the side frames 303, 303 of the intermediate frame 300. Lower portions 232a, 232a of the rear links 232, 232 are supported by second brackets 305a, 305a fixed close to a rear portion of the side frames 303, 303 of the intermediate frame 300.

Upper portions 231b, 231b of the front links 231, 231 are supported by an attachment shaft 204 suspended between the side frames 203, 203 close to the front frame 201 of the seat support frame 200, and upper portions 232b, 232b of the rear links 232, 232 are supported by an attachment shaft 205 suspended between the side frames 203, 203 close to the rear frame 202 thereof.

The seat support frame 200 rotatably moves with respect to the intermediate frame 300 centered at the lower portions 231a, 232a of the front links 231, 231 and the rear links 232, 232. However, the links 131, 131, 132, 132 of the first link mechanism 130 are designed to, in a forward inclined position at a balanced point, change the movement of the intermediate frame 300 within this forward inclined position, whereas the links 231, 231, 232, 232 of the second link mechanism 230 are designed to be in a backward inclined position at the balanced point and to change the movement of the seat support frame 200 within this backward inclined position. That is, the links 131, 131, 132, 132 of the first link mechanism 130 and the links 231, 231, 232, 232 of the second link mechanism 230 are attached so that with respect to the change in up-down movement, rotation directions are opposite. This allows a reduction in front-rear movement of the seat support frame 200 and a seat supported by it.

Between connection center points of the lower portions 231a, 231a of the front links 231, 231 of the second link mechanism 230 supported by the first brackets 304a, 304a separated at a predetermined distance in the width direction in the intermediate frame 300, a third torsion bar 241a is disposed, and between connection center points of the lower portions 232a, 232a of the rear links 232, 232 of the second link mechanism 230 supported by the second brackets 305a, 305a, a fourth torsion bar 241b is disposed (refer to FIG. 3). In this embodiment, a second spring mechanism 240 is constituted of the third and fourth torsion bars 241a, 241b. One-side ends of the third and fourth torsion bars 241a, 241b are linked to the lower portions 231a, 231b, 232a, 232b of the front links 231, 231 and the rear links 232, 232, and the other ends of the third and fourth torsion bars 241a, 241b are provided not to rotate relative to the first and second brackets 304a, 304a, 305a, 305a of the intermediate frame 300 respectively. This causes the one-side ends and the other ends in a long direction of the third and fourth torsion bars 241a, 241b to be relatively twisted.

As described above, owing to a combination of the first and second torsion bars 141a, 141b and the magnetic spring 142, the first spring mechanism 140 has the characteristic of forming the constant load region where the spring constant is substantially zero, and the seat suspension mechanism 1 further has the second spring mechanism 240 constituted of the third and fourth torsion bars 241a, 241b in this embodiment. This allows the overall spring characteristic of the seat suspension mechanism 1 obtained by adding up the first spring mechanism 140 and the second spring mechanism 240 to be set variously by adjusting a twist amount when the third and fourth torsion bars 241a, 241b are initialized.

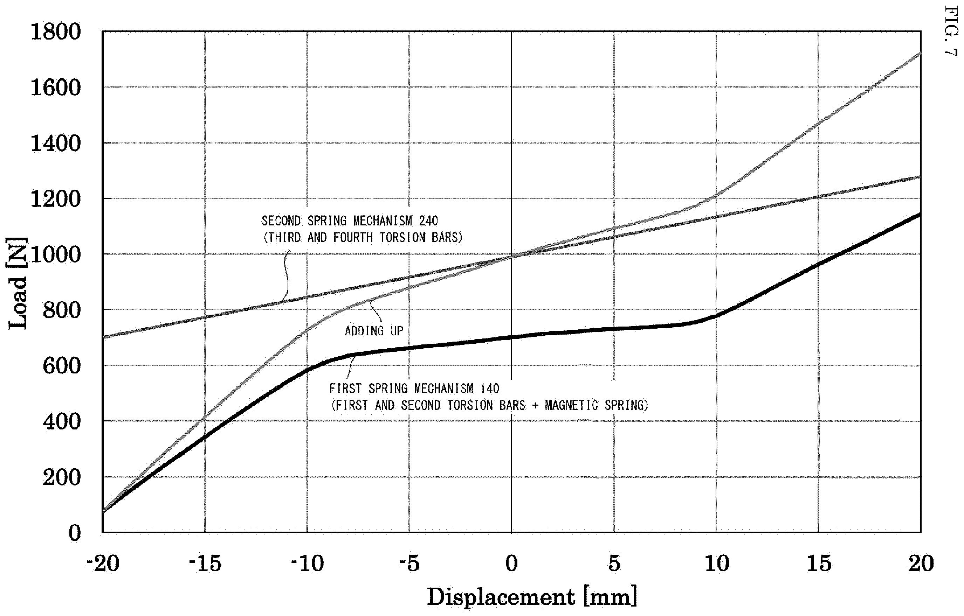

FIG. 7 to FIG. 9 illustrate examples of setting of the third and fourth torsion bars 241a, 241b. The charts each illustrate the load-deflection characteristic of the first spring mechanism 140 combining the first and second torsion bars 141a, 141b and the magnetic spring 142, a load-deflection characteristic of the second spring mechanism 240 of the third and fourth torsion bars 241a, 241b, and a load-deflection characteristic of the entire seat suspension mechanism 1 combining the first spring mechanism 140 and the second spring mechanism 240.

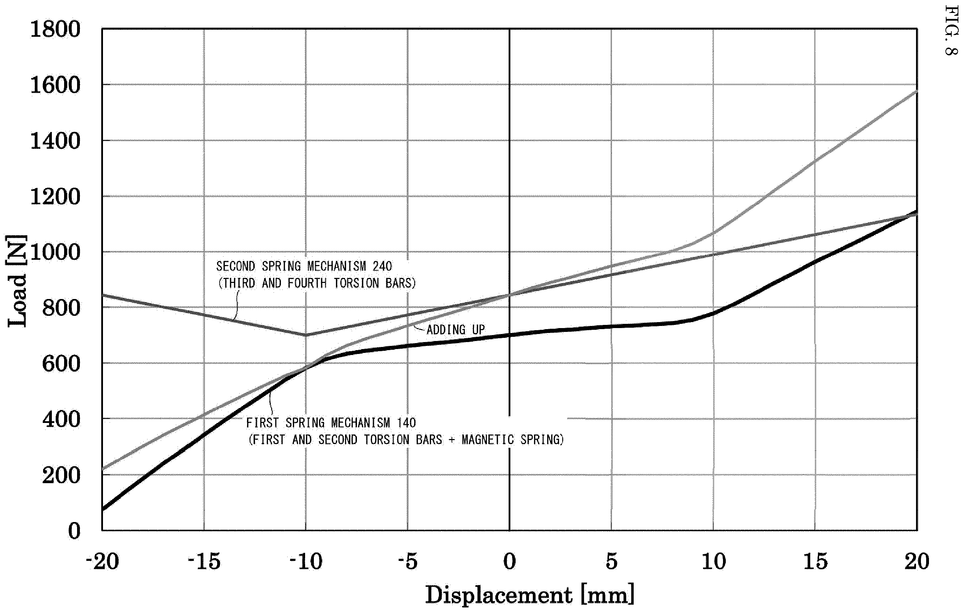

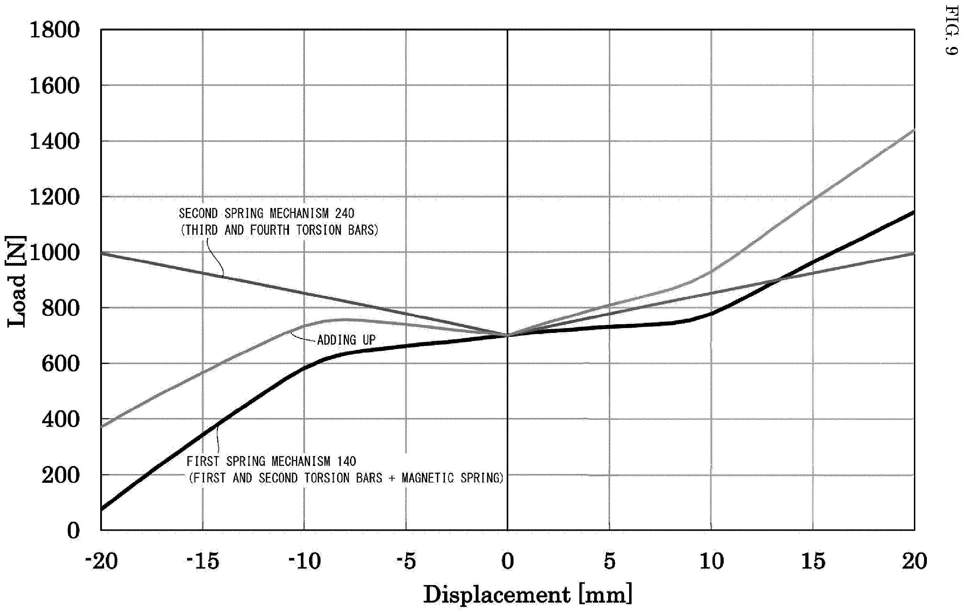

FIG. 7 illustrates an example in which the second spring mechanism 240 is set to exhibit a linear positive spring constant when the seat support frame 200 and the intermediate frame 300 are displaced downward over the balanced point (the position of 0 mm) from an upper position. FIG. 8 illustrates an example in which the third and fourth torsion bars 241a, 241b of the second spring mechanism 240 are set to be released from twisting at the position of "-10 mm" short of the balanced point, and twisted again when the seat support frame 200 and the intermediate frame 300 are displaced downward from the position, and FIG. 9 illustrates an example in which the third and fourth torsion bars 241a, 241b of the second spring mechanism 240 are set to be released from twisting at the balanced point, and twisted again when the seat support frame 200 and the intermediate frame 300 are displaced downward from the point. That is, in each of FIG. 8 and FIG. 9, the second spring mechanism 240 has a characteristic of exhibiting a nonlinear characteristic at the point where a biasing direction changes in the middle of the change, and exhibiting a negative spring characteristic that the seat support frame 200 and the intermediate frame 300 are biased downward to the predetermined position (in FIG. 8, to the position of "-10 mm" short of the balanced point, in FIG. 9, to the position of the balanced point) when they are displaced downward from the upper position. This results in that when the seat support frame 200 and the intermediate frame 300 rise over this predetermined position (in FIG. 8, the position of "-10 mm" short of the balanced point, in FIG. 9, the position of the balanced point) when displaced upward from a lower position, the second spring mechanism 240 acts as braking force, and can also impart a characteristic of preventing topping through setting of the third and fourth torsion bars 241a, 241b. Accordingly, the setting of the above-described third and fourth torsion bars 241a, 241b of the second spring mechanism 240 allows a damping ratio corresponding to a rise in acceleration to be designed.

In comparison of the load-deflection characteristic of the entire seat suspension mechanism 1, on the basis of the characteristic in FIG. 7, in the case in FIG. 8, a spring constant up to "-10 mm" is reduced, and in the case in FIG. 9, a spring constant in a range "from -10 mm to 0 mm" can be particularly reduced. Hence, the seat suspension mechanism 1 of this embodiment has the second spring mechanism 240 including the third and fourth torsion bars 241a, 241b, and thereby, adjusting them allows a configuration including various characteristics.

Here, between the base frame 100 and the seat support frame 200, a damper 150 which exhibits damping force to absorb energy when the two move up and down relatively is provided. In this embodiment, without suspending the damper between the intermediate frame 300 and the base frame 100 and between the intermediate frame 300 and the seat support frame 200, the damper 150 is suspended with the intermediate frame 300 located between the base frame 100 and the seat support frame 200 skipped.

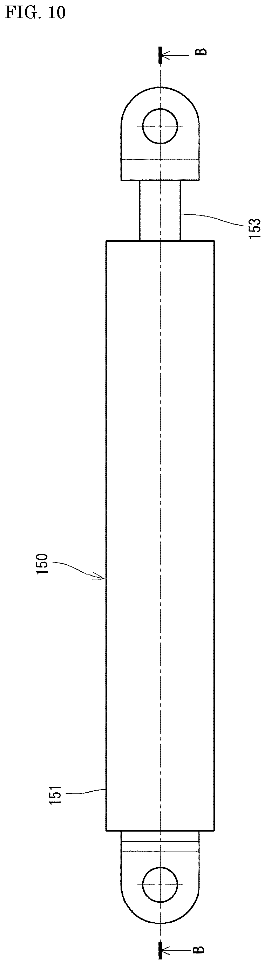

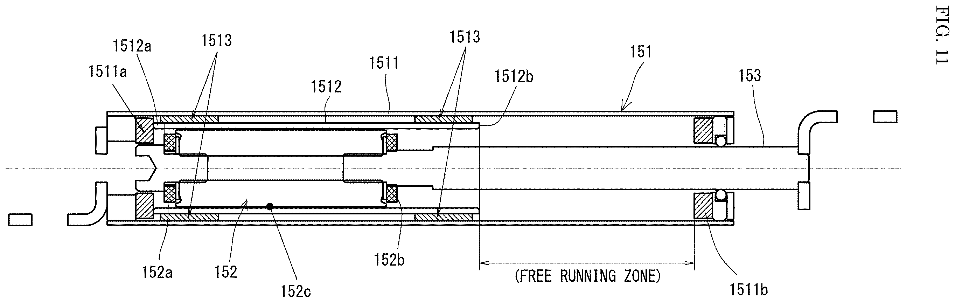

The damper 150 is a telescopic one including a cylinder 151 and a piston 152 which moves relatively in the cylinder 151 as illustrated in FIG. 10 and FIG. 11. A normal oil damper or the like can also be used as the damper 150, and a movement zone of the piston 152 in the cylinder 151 corresponding to a predetermined up-down movement range including the balanced point when a person is seated (the position when seated in a static state. The position aligned with the neutral position of the intermediate frame 300 as much as possible by an adjustment with the elastic force adjusting member 125) is preferably a free running zone where the damping force does not act.

The damper 150 having such a free running zone takes on a dual cylinder structure in which the cylinder 151 includes an outer fixed cylinder 1511 and an inner movable cylinder 1512 disposed in the inside thereof as illustrated in FIG. 11. The piston 152 is disposed to be slidable in the inner movable cylinder 1512. Stopper portions 1511a, 1511b are provided at long-side-direction end portions of the outer fixed cylinder 1511, and the inner movable cylinder 1512 is shorter in axial-direction length than the outer fixed cylinder 1511 and can move until end portions 1512a, 1512b in the long-side direction of the inner movable cylinder 1512 abut on the stopper portions 1511a, 1511b. The piston 152 is also similar, and can move until end portions 152a, 152b in the long-side direction abut on the stopper portions 1511a, 1511b. In the axial-direction length, the inner movable cylinder 1512 is longer than the piston 152, and the piston rod 153 is linked to the piston 152.

The piston 152 is provided with a string portion 152c formed by winding a linear member such as a thread which exhibits a predetermined friction damping force between the inner movable cylinder 1512 and the piston 152 around its outer peripheral portion. In this embodiment, a viscous fluid such as grease having low consistency is made to adhere to the string portion 152c. The viscous fluid can be made to adhere to the linear member such as the thread composing the string portion 152c by impregnation or coating. Accordingly, when the piston 152 moves relative to the inner movable cylinder 1512, the friction damping force caused by tension of the linear member composing the string portion 152c and viscous damping force of speed dependence caused by the viscous fluid act. That is, by a relative displacement of the piston 152 to the inner movable cylinder 1512, friction force between the two is converted to the tension of the string portion 152c, and with an increase in the displacement amount, the thread composing the string portion 152c is hardened integrally to change in the course of reducing a friction coefficient, thereby suppressing heat generation. This change causes the viscous damping force to be speed-dependent. Therefore, the action of the friction damping force becomes relatively large in a low-speed input, but the viscous damping force becomes higher as the speed increases. Note that depending on increase and decrease in the number of turns of the thread composing the string portion 152c, a gap between adjacent portions of the wound thread, the number of stacks of the wound thread, or the like, the friction force and the viscous damping force to be generated are appropriately controlled.

On one hand, between an outer peripheral surface of the inner movable cylinder 1512 and an inner peripheral surface of the outer fixed cylinder 1511, so as to make friction force between the two relatively smaller than the friction force generated by the string portion 152c between the inner movable cylinder 1512 and the piston 152, in this embodiment, between the inner movable cylinder 1512 and the outer fixed cylinder 1511, a low-friction member 1513 such as a rolling member or a sliding member (for example, felt) is interposed.

This makes the inner movable cylinder 1512 and the piston 152 move together in the outer fixed cylinder 1511 owing to a difference between the friction force between the inner movable cylinder 1512 and the piston 152, and, the friction force between the inner movable cylinder 1512 and the outer fixed cylinder 1511 until the end portions 1512a 1512b of the inner movable cylinder 1512 abut on the stopper portions 1511a 1511b when the piston 152 moves relatively in the cylinder 151 while following movement of the piston rod 153. At this time, frictional resistance is very small between the inner movable cylinder 1512 and the outer fixed cylinder 1511 owing to the low-friction member 1513, and the inner movable cylinder 1512 substantially freely runs in the outer fixed cylinder 1511 to generate little damping force. After the end portions 1512a, 1512b of the inner movable cylinder 1512 abut on either of the stopper portions 1511a, 1511b, because the inner movable cylinder 1512 is prevented from moving, the piston 152 slides in the inner movable cylinder 1512 alone. This causes such friction damping force and viscous damping force as described above to act between the piston 152 and the inner movable cylinder 1512.

Accordingly, a range where the inner movable cylinder 1512 of the cylinder 151 moves relatively in the outer fixed cylinder 1511 becomes a free running zone where the damping force does not substantially act, and a distance of the free running zone corresponds to a difference in the axial-direction length between the outer fixed cylinder 1511 and the inner movable cylinder 1512. As a result, when the intermediate frame 300 is located in the predetermined up-down movement range including the balanced point, the movement zone where the piston 152 does not move relative to the inner movable cylinder 1512 and the damping force does not effectively work is formed. Preferably, at the balanced point in a seated state when the intermediate frame 300 moves up and down relative to the base frame 100 (the position adjusted so as to be aligned with the neutral position of the entire stroke, in which the intermediate frame 300 can move up and down, as much as possible), the inner movable cylinder 1512 is set to be at a substantially middle position of the entire movement range in the outer fixed cylinder 1511. This causes the predetermined up-down movement range including the balanced point to be formed evenly on the upper and lower sides thereof centered at the balance point.

When the seat support frame 200 and the intermediate frame 300 are swung relatively by a vibration input during driving, in a case where the damper 150 responds to the aforesaid free running zone, the damping force does not substantially act, and the first spring mechanism 140 and the second spring mechanism 240 mainly serve a vibration absorbing function, and in a case where a vibration with a low-frequency amplitude equal to or larger than a predetermined amplitude is input, the damping force of the damper 150 acts to absorb impact energy.

However, in this embodiment, as described above, the damper 150 skips over the intermediate frame 300 and is suspended between the base frame 100 and the seat support frame 200. Accordingly, phases with respect to vibrations differ between the seat support frame 200 on which the damping force of the damper 150 acts directly and the intermediate frame 300 on which the characteristic of the damper 150 does not act directly. As a result, it is possible to exhibit high vibration absorption characteristic and impact absorption characteristic.

Further, depending on the directions of disposing the damper 150, the characteristic of the seat suspension mechanism 1 can be varied. That is, as illustrated in FIG. 3, when the damper 150 is disposed to be inclined in a direction of crossing an inclined direction of the links 131, 132 of the first link mechanism 130 at the balanced point, the damper 150 acts more efficiently with respect to movements of the first link mechanism 130 and the first spring mechanism 140 than when disposed in a direction as illustrated in FIG. 4 opposite to that in FIG. 3. On the other hand, as illustrated in FIG. 4, when the damper 150 is disposed in a position inclined in a direction of crossing an inclined direction of the links 231, 232 of the second link mechanism 230 at the balanced point, the damper 150 acts more efficiently with respect to movements of the second link mechanism 230 and the second spring mechanism 240 than the case in FIG. 3.

Meanwhile, in this embodiment, one end of the damper 150 is not attached to the intermediate frame 300, and is attached to the seat support frame 200. Hence, the damping force of the damper 150 disposed in the direction in FIG. 4 is more likely to act than the one disposed in such a direction as in FIG. 3. Accordingly, as the entire seat suspension mechanism 1, the spring characteristic is strengthened in the state in FIG. 3, and a damping characteristic is strengthened in the state in FIG. 4.

On one hand, as illustrated in FIG. 5, two dampers 150A, 150B can be configured to be disposed in an X shape when seen from the side thereof, that is, can also be configured to use the damper 150A disposed in the inclined position crossing the inclined direction of the links 131, 132 of the first link mechanism 130 at the balanced point and the damper 150B disposed in the direction opposite thereto, that is, in the inclined position crossing the inclined direction of the links 231, 232 of the second link mechanism 230 at the balanced point in combination. In this case, a higher damping force can be made to act, but a difference in timings at which damping forces of the two dampers 150A, 150B start to act allows a phase shift between movement of the first link mechanism 130 and movement of the second link mechanism 230 to occur, which allows a high vibration absorption characteristic to be exhibited similarly to the states in FIG. 3 and FIG. 4.

According to this embodiment, a seated person adjusts the elastic force of the first spring mechanism 140 and sets the seat support frame 200 and the intermediate frame 300 to be at the neutral position (balanced point) in the up-down displacement range by using the first elastic force adjusting member 125. When vibrations are input, the links 131, 132 of the first link mechanism 130 move up and down while following the rotation trajectory centered at their lower portions 131a, 132a, and the links of the second link mechanism 230 also move up and down while following a rotation trajectory centered at their lower portions 23 1a, 232a. At this time, the first spring mechanism 140 in response to the movement of the first link mechanism 130 has the characteristic of including the constant load region, and the second spring mechanism 240 in response to the movement of the second link mechanism 230 has the linear or nonlinear characteristic as illustrated in FIG. 7 to FIG. 9. This causes the phase shift to occur between the movement of the first link mechanism 130 and the movement of the second link mechanism 230, which efficiently absorbs the vibrations.

In particular, in this embodiment, as illustrated in FIG. 3 to FIG. 5, the dampers 150, 150A, 150B are each suspended between the base frame 100 and the seat support frame 200, and thereby the phase shift is likely to occur between the movement of the first link mechanism 130 and the movement of the second link mechanism 230, which allows the efficient absorption of vibrations. Further, as illustrated in FIG. 3 to FIG. 5, various forms of the
inclined directions when the dampers 150, 150A, 150B are disposed allow control of the phase and adjustment of setting of the vibration absorption characteristic and the impact absorption characteristic.

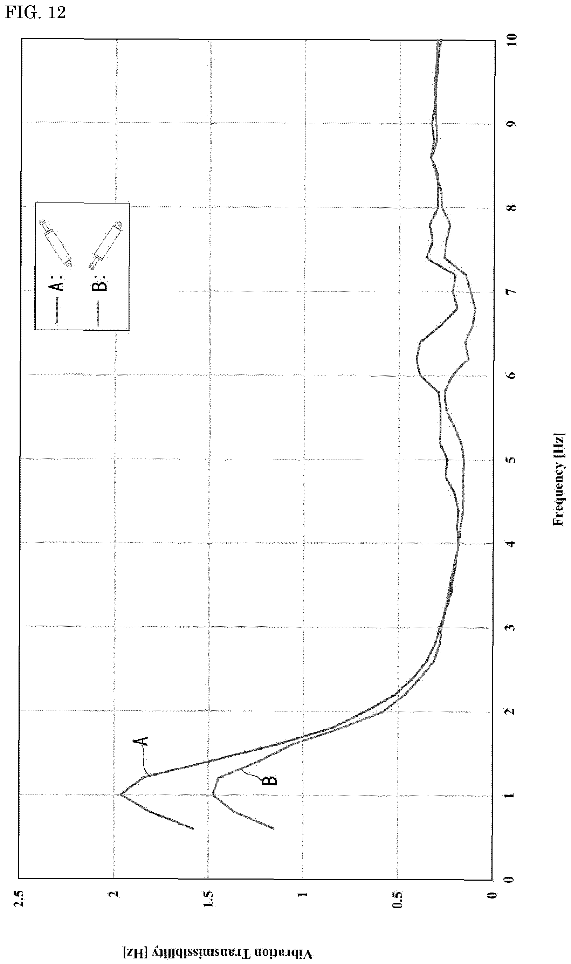

FIG. 12 illustrates the result of the vibration test performed by attaching a seat on the seat suspension mechanism 1 of this embodiment and seating a male subject (a weight of 64 kg) thereon. The vibration test was performed by the excitation according to a standard for the input spectral class EM7 "compact dumper" defined in JIS A 8304:2001 "Earth moving machinery-Laboratory evaluation of operator seat vibration" based on ISO 7096:2000. Specifically, the excitation was performed under a 3.24 Hz dominant frequency and a 5.56 (m/s²)²/Hz maximum value of PSD. As a vibrator, a 6-axis vibrator manufactured by DELTA TOOLING CO., LTD. was used, and on a vibration table of the vibrator, the seat suspension mechanism 1 in which a seat was attached on the seat support frame 200 was set, and the subject was seated on the seat.

In FIG. 12, a reference sign A indicates the test result of the seat suspension mechanism 1 in which the damper 150 is disposed in the inclined direction illustrated in FIG. 3, and a reference sign B indicates the test result of the seat suspension mechanism 1 in which the damper 150 is disposed in the inclined direction illustrated in FIG. 4. According to FIG. 12, resonant frequencies in EM7 were 1.0 Hz in both cases. Gains at a resonance peak were each less than 2.0, but as compared with the state in FIG. 3 indicated by the reference sign A, in the state in FIG. 4 indicated by the reference sign B, that is, the state where the damper 150 was disposed in the position inclined in the direction crossing the inclined direction of the links 231, 232 of the second link mechanism 230 at the balanced point, the gain was lower, and the damping force was higher. Further, regarding EM7 to which the largest amplitude of vibration of an excitation waveform makes it difficult to apply in the standard of ISO 7096: 2000, gains were each less than 0.5 at 3.24 Hz at a peak of acceleration of the excitation waveform. Further, S.E.A.T values were each less than 0.6.

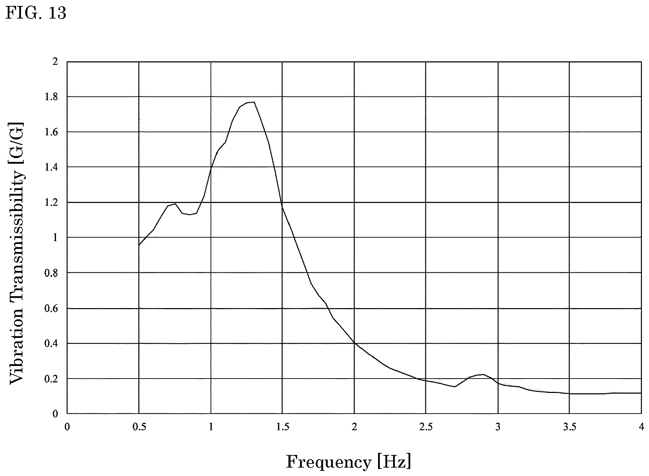

On one hand, FIG. 13 is a chart illustrating the result of a damping test in which a rubber weight with load mass of 75 kg was fixed and attached on the seat with a belt and a logarithmic swept sine wave (0.5 to 4.0 Hz) was excited by a ±16 mm input amplitude (a displacement amplitude corresponding to 40% of the total stroke amount of 80 mm of the seat suspension mechanism 1000). Note that in this test, as the damper 150, the one disposed in the state illustrated in FIG. 3 is used. A resonant frequency was 1.30 Hz, and a gain at a resonance peak was 1.77.

From the test results in FIG. 12 and FIG. 13, it is found that the seat suspension mechanism 1 of this embodiment has a high vibration damping function.

### Explanation of Reference Signs

- 1: seat suspension mechanism
- 100: base frame
- 130: first link mechanism
- 131: front link
- 132: rear link
- 140: first spring mechanism
- 141a: first torsion bar
- 141b: second torsion bar
- 142: magnetic spring
- 150, 150A, 150B: damper
- 200: seat support frame
- 230: second link mechanism
- 231: front link
- 232: rear link
- 240: second spring mechanism
- 241a: third torsion bar
- 241b: fourth torsion bar
- 300: intermediate frame

## Claims

1. A seat suspension mechanism disposed between a vehicle body structure and a seat, the seat suspension mechanism comprising:
a base frame (100) attached on the vehicle body structure side;
a seat support frame (200) attached on the seat side; and
a damper (150) suspended between the base frame (100) and the seat support frame (200),
**characterized in that** the seat suspension mechanism further comprises
an intermediate frame (300) located between the base frame (100) and the seat support frame (200);
a first link mechanism (130) supporting the intermediate frame (300) with respect to the base frame (100);
a second link mechanism (230) supporting the seat support frame (200) with respect to the intermediate frame (300);
a first spring mechanism (140) which elastically biases the intermediate frame (300);
a second spring mechanism (240) which elastically biases the seat support frame (200).

2. The seat suspension mechanism according to claim 1,
wherein the first link mechanism (130) and the second link mechanism (230) are each constituted by a parallel link structure, and meanwhile, are attached so that a rotation direction of links of the first link mechanism (130) and a rotation direction of links of the second link mechanism (230), in accordance with a displacement of the intermediate frame (300) or the seat support frame (200), are opposite, and
wherein the damper (150) is attached in a position in an inclined direction opposite to an inclined direction of the links of the first link mechanism (130) at a balanced point.

3. The seat suspension mechanism according to claim 1,
wherein the first link mechanism (130) and the second link mechanism (230) are each constituted by a parallel link structure, and meanwhile, are attached so that a rotation direction of links of the first link mechanism (130) and a rotation direction of links of the second link mechanism (230), in accordance with a displacement of the intermediate frame (300) or the seat support frame (200), are opposite, and
wherein the damper (150) is attached in a position in an inclined direction opposite to an inclined direction of the links of the second link mechanism (230) at a balanced point.

4. The seat suspension mechanism according to claim 1,
wherein the first link mechanism (130) and the second link mechanism (230) are each constituted by a parallel link structure, and meanwhile, are attached so that a rotation direction of links of the first link mechanism (130) and a rotation direction of links of the second link mechanism (230), in accordance with a displacement of the intermediate frame (300) or the seat support frame (200), are opposite, and
wherein two kinds of the dampers (150) whose inclined directions are opposite to each other are disposed.

5. The seat suspension mechanism according to any one of claims 1 to 4, wherein as the first spring mechanism (140) and the second spring mechanism (240), torsion bars (141a, 141b, 241a, 241b) linked to any link of the first link mechanism (130) and any link of the second link mechanism (230) to be rotated are respectively used, and an initial position at a twist angle of each of the torsion bars (141a, 141b, 241a, 241b) is adjustable.

6. The seat suspension mechanism according to claim 5, wherein when the torsion bar (241a, 241b) linked to any link of the second link mechanism (230) is displaced downward from an upper position, the initial position is set to exhibit a negative spring characteristic of downward biasing to a predetermined position.

7. The seat suspension mechanism according to claim 1,
wherein the first spring mechanism (140) comprises:
a linear spring (141a, 141b) which exhibits a linear characteristic of biasing in a direction of separating the intermediate frame (300) from the base frame (100) in a normal state; and
a magnetic spring (142) which includes stationary magnets (1420a) and a movable magnet (1421a) whose relative position to the stationary magnets (1420a) is displaced in accordance with up-down movement of the intermediate frame (300) relative to the base frame (100), and exhibits a nonlinear spring characteristic that a spring constant is changed depending on the relative position of the stationary magnets (1420a) and the movable magnet (1421a), and
wherein a spring characteristic of combining the linear spring (141a, 141b) and the magnetic spring (142) includes a characteristic of being a constant load when the intermediate frame (300) is located in a predetermined up-down movement range including a balanced point.

## Patentansprüche

1. Sitzaufhängungsmechanismus, der zwischen einer Fahrzeugkarosseriestruktur und einem Sitz angeordnet ist, wobei der Sitzaufhängungsmechanismus Folgendes umfasst:
einen Grundrahmen (100), der an der Seite der Fahrzeugkarosseriestruktur befestigt ist;
einen Sitzstützrahmen (200), der auf der Seite des Sitzes befestigt ist; und
einen Dämpfer (150), der zwischen dem Grundrahmen (100) und dem Sitzstützrahmen (200) aufgehängt ist, **dadurch gekennzeichnet, dass** der Sitzaufhängungsmechanismus weiter umfasst
einen Zwischenrahmen (300), der sich zwischen dem Grundrahmen (100) und dem Sitzstützrahmen (200) befindet;
einen ersten Verbindungsmechanismus (130), der den Zwischenrahmen (300) in Bezug auf den Grundrahmen (100) stützt;
einen zweiten Verbindungsmechanismus (230), der den Sitzstützrahmen (200) in Bezug auf den Zwischenrahmen (300) stützt;
einen ersten Federmechanismus (140), der den Zwischenrahmen (300) elastisch vorspannt;
einen zweiten Federmechanismus (240), der den Sitzstützrahmen (200) elastisch vorspannt.

2. Sitzaufhängungsmechanismus nach Anspruch 1,
wobei der erste Verbindungsmechanismus (130) und der zweite Verbindungsmechanismus (230) jeweils aus einer parallelen Verbindungsstruktur bestehen und indes so befestigt sind, dass eine Drehrichtung von Verbindungen des ersten Verbindungsmechanismus (130) und eine Drehrichtung von Verbindungen des zweiten Verbindungsmechanismus (230) entsprechend einer Verschiebung des Zwischenrahmens (300) oder des Sitzstützrahmens (200) einander entgegengesetzt sind, und
wobei der Dämpfer (150) in einer Position in einer geneigten Richtung entgegengesetzt zu einer geneigten Richtung der Verbindungen des ersten Verbindungsmechanismus (130) an einem Gleichgewichtspunkt befestigt ist.

3. Sitzaufhängungsmechanismus nach Anspruch 1,
wobei der erste Verbindungsmechanismus (130) und der zweite Verbindungsmechanismus (230) jeweils aus einer parallelen Verbindungsstruktur bestehen und indes so befestigt sind, dass eine Drehrichtung von Verbindungen des ersten Verbindungsmechanismus (130) und eine Drehrichtung von Verbindungen des zweiten Verbindungsmechanismus (230) entsprechend einer Verschiebung des Zwischenrahmens (300) oder des Sitzstützrahmens (200) einander entgegengesetzt sind, und
wobei der Dämpfer (150) in einer Position in einer geneigten Richtung entgegengesetzt zu einer geneigten Richtung der Verbindungen des zweiten Verbindungsmechanismus (230) an einem Gleichgewichtspunkt befestigt ist.

4. Sitzaufhängungsmechanismus nach Anspruch 1,
wobei der erste Verbindungsmechanismus (130) und der zweite Verbindungsmechanismus (230) jeweils aus einer parallelen Verbindungsstruktur bestehen und indes so befestigt sind, dass eine Drehrichtung von Verbindungen des ersten Verbindungsmechanismus (130) und eine Drehrichtung von Verbindungen des zweiten Verbindungsmechanismus (230) entsprechend einer Verschiebung des Zwischenrahmens (300) oder des Sitzstützrahmens (200) einander entgegengesetzt sind, und
wobei zwei Arten von Dämpfern (150), deren geneigte Richtungen einander entgegengesetzt sind, angeordnet sind.

5. Sitzaufhängungsmechanismus nach einem der Ansprüche 1 bis 4, wobei als erster Federmechanismus (140) und als zweiter Federmechanismus (240) jeweils Torsionsstangen (141a, 141b, 241a, 241b), die mit einer beliebigen Verbindung des ersten Verbindungsmechanismus (130) und einer beliebigen Verbindung des zweiten Verbindungsmechanismus (230) drehbar verbunden sind, verwendet werden, und eine Ausgangsposition bei einem Verdrehungswinkel jeder der Torsionsstangen (141a, 141b, 241a, 241b) einstellbar ist.

6. Sitzaufhängungsmechanismus nach Anspruch 5, wobei, wenn die Torsionsstange (241a, 241b), die mit einer beliebigen Verbindung des zweiten Verbindungsmechanismus (230) verbunden ist, von einer oberen Position aus nach unten verschoben wird, die Ausgangsposition so eingestellt wird, dass sie eine negative Federkennlinie im Sinne einer Abwärtsvorspannung zu einer vorbestimmten Position hin aufweist.

7. Sitzaufhängungsmechanismus nach Anspruch 1,
wobei der erste Federmechanismus (140) umfasst:
eine lineare Feder (141a, 141b), die in einem Normalzustand eine Kennlinie im Sinne einer Vorspannung in Richtung der Trennung des Zwischenrahmens (300) vom Grundrahmen (100) aufweist; und
eine Magnetfeder (142), die feststehende Magnete (1420a) und einen beweglichen Magneten (1421a) einschließt, deren Position im Verhältnis zu den feststehenden Magneten (1420a) entsprechend der Auf- und Abwärtsbewegung des Zwischenrahmens (300) im Verhältnis zum Grundrahmen (100) verschoben wird, und eine nicht lineare Federkennlinie in dem Sinne aufweist, dass eine Federkonstante in Abhängigkeit von der relativen Position der feststehenden Magnete (1420a) und des beweglichen Magneten (1421a) geändert wird, und
wobei eine Federkennlinie der Kombination aus der linearen Feder (141a, 141b) und der Magnetfeder (142) eine Kennlinie für eine konstante Belastung einschließt, wenn sich der Zwischenrahmen (300) innerhalb eines vorbestimmten Bereichs für die Auf- und Abwärtsbewegung befindet, der einen Gleichgewichtspunkt einschließt.

## Revendications

1. Mécanisme de suspension de siège disposé entre une structure de carrosserie de véhicule et un siège, le mécanisme de suspension de siège comprenant :
un châssis de base (100) fixé du côté de la structure de carrosserie de véhicule ;
un châssis (200) de support de siège fixé du côté du siège; et
un amortisseur (150) suspendu entre le châssis de base (100) et le châssis (200) de support du siège, **caractérisé en ce que** le mécanisme de suspension de siège comprend en outre
un châssis intermédiaire (300) situé entre le châssis de base (100) et le châssis (200) de support de siège;
un premier mécanisme de liaison (130) supportant le châssis intermédiaire (300) par rapport au châssis de base (100) ;
un second mécanisme de liaison (230) supportant le châssis (200) de support de siège par rapport au châssis intermédiaire (300) ;
un premier mécanisme à ressort (140) qui sollicite élastiquement le châssis intermédiaire (300) ;
un second mécanisme à ressort (240) qui sollicite élastiquement le châssis (200) de support de siège.

2. Mécanisme de suspension de siège selon la revendication 1,
dans lequel le premier mécanisme de liaison (130) et le second mécanisme de liaison (230) sont chacun constitués d'une structure de liaison parallèle, et sont fixés de telle sorte qu'un sens de rotation des liaisons du premier mécanisme de liaison (130) et un sens de rotation des liaisons du second mécanisme de liaison (230), conformément à un déplacement du châssis intermédiaire (300) ou du châssis (200) de support de siège, soient opposés, et
dans lequel l'amortisseur (150) est fixé dans une position dans une direction inclinée opposée à une direction inclinée des liaisons du premier mécanisme de liaison (130) en un point d'équilibre.

3. Mécanisme de suspension de siège selon la revendication 1,
dans lequel le premier mécanisme de liaison (130) et le second mécanisme de liaison (230) sont chacun constitués d'une structure de liaison parallèle, et sont fixés de telle sorte qu'un sens de rotation des liaisons du premier mécanisme de liaison (130) et un sens de rotation des liaisons du second mécanisme de liaison (230), conformément à un déplacement du châssis intermédiaire (300) ou du châssis (200) de support de siège, soient opposés, et
dans lequel l'amortisseur (150) est fixé dans une position dans une direction inclinée opposée à une direction inclinée des liaisons du second mécanisme de liaison (230) en un point d'équilibre.

4. Mécanisme de suspension de siège selon la revendication 1,
dans lequel le premier mécanisme de liaison (130) et le second mécanisme de liaison (230) sont chacun constitués d'une structure de liaison parallèle, et sont fixés de telle sorte qu'un sens de rotation des liaisons du premier mécanisme de liaison (130) et un sens de rotation des liaisons du second mécanisme de liaison (230), conformément à un déplacement du châssis intermédiaire (300) ou du châssis (200) de support de siège, soient opposés, et
dans lequel sont disposés deux types d'amortisseurs (150) dont les directions inclinées sont opposées l'une à l'autre.

5. Mécanisme de suspension de siège selon l'une quelconque des revendications 1 à 4, dans lequel, pour servir de premier mécanisme à ressort (140) et de second mécanisme à ressort (240), des barres de torsion (141a, 141b, 241a, 241b) reliées à une liaison quelconque du premier mécanisme de liaison (130) et une liaison quelconque du second mécanisme de liaison (230) à tourner sont utilisées respectivement, et une position initiale à un angle de torsion de chacune des barres de torsion (141a, 141b, 241a, 241b) peut être réglée.

6. Mécanisme de suspension de siège selon la revendication 5, dans lequel lorsque la barre de torsion (241a, 241b) reliée à une liaison quelconque du second mécanisme de liaison (230) est déplacée vers le bas depuis un position supérieure, la position initiale est définie pour présenter une caractéristique de ressort négative de sollicitation vers le bas vers une position prédéterminée.

7. Mécanisme de suspension de siège selon la revendication 1,
dans lequel le premier mécanisme à ressort (140) comprend :
un ressort linéaire (141a, 141b) qui présente une caractéristique linéaire de sollicitation dans une direction de séparation du châssis intermédiaire (300) par rapport au châssis de base (100) dans un état normal ; et
un ressort magnétique (142) qui inclut des aimants fixes (1420a) et un aimant mobile (1421a)
dont la position relative par rapport aux aimants fixes (1420a) est déplacée conformément à un mouvement haut-bas du châssis intermédiaire (300) par rapport au châssis de base (100), et présente une caractéristique de ressort non-linéaire selon laquelle une constante de ressort est changée en fonction de la position relative des aimants fixes (1420a) et de l'aimant mobile (1421a), et
dans lequel une caractéristique de ressort d'une combinaison de ressort linéaire (141a, 141b) et de ressort magnétique (142) inclut une caractéristique de charge constante lorsque le châssis intermédiaire (300) est situé dans une plage de mouvement prédéterminée haut-bas incluant un point d'équilibre.
